(19) Europäisches Patentamt

European Patent Office

Office européen des brevets

(11) Veröffentlichungsnummer : **0 527 326 B1**

(12) # EUROPÄISCHE PATENTSCHRIFT

(45) Veröffentlichungstag der Patentschrift :
**29.11.95 Patentblatt 95/48**

(51) Int. Cl.$^6$ : **G01S 17/02, G01B 11/02**

(21) Anmeldenummer : **92111391.6**

(22) Anmeldetag : **04.07.92**

(54) **Reflexionslichttaster mit Hintergrundunterdrückung.**

(30) Priorität : **01.08.91 DE 4125479**

(43) Veröffentlichungstag der Anmeldung :
**17.02.93 Patentblatt 93/07**

(45) Bekanntmachung des Hinweises auf die
Patenterteilung :
**29.11.95 Patentblatt 95/48**

(84) Benannte Vertragsstaaten :
**DE ES FR GB IT SE**

(56) Entgegenhaltungen :
**EP-A- 0 384 353**
**EP-A- 0 394 888**
**US-A- 4 242 962**
**FEINWERKTECHNIK + MESSTECHNIK Bd. 97,**
**Nr. 6, Juni 1989, MUENCHEN DE Seiten 261 -**
**264 MEINERT 'Hintergrundausblendung bei**
**Lichttastern'**

(73) Patentinhaber : **Leuze electronic GmbH + Co.**
**Postfach 11 11**
**D-73277 Owen (DE)**

(72) Erfinder : **Schwartz, Günther**
**Kalixtenbergstrasse 36**
**W-7315 Weilheim/Teck (DE)**

## Beschreibung

Die Erfindung bezieht sich auf einen Reflexionslichttaster nach dem Oberbegriff des Anspruchs 1, der aus dem Artikel von H. Meinert: "Hintergrundausblendung bei Lichttastern" aus der Feinwerktechnik & Messtechnik, Bd. 97, Nr. 6, Juni 1989, München DE bekannt ist.

Weitere Lichttaster sind u.a. durch das Prospektblatt Leuze electronic, FRK 61/4-01, März 1988, bekannt.

Die Mindestentfernung, in der ein Objekt noch sicher erkennbar ist, hängt bei diesen Lichttastern davon ab, ob die auf das Lichtempfangselement für den Nahbereich auftreffende Strahlungsleistung noch eine hinreichende Signalgabe bewirkt bzw. das Lichtempfangselement überhaupt noch beaufschlagt. Eine Unterschreitung der so vorgegebenen Mindestentfernung des Objekts vom Lichttastergehäuse (Nahbereich) könnte zwar durch die Verwendung eines weiteren Nah-Empfangselements erreicht werden, das bei einem so geringen Abstand des Objekts vom Lichttastergehäuse, bei dem das erste Nah-Empfangselement nicht mehr hinreichend mit Reflexlicht beaufschlagt wird, dessen Funktion übernimmt.

Abgesehen davon, daß zusätzliche Lichtempfangselemente relativ teuer sind, wird der Lichttaster auch störanfälliger.

Der Erfindung liegt die Aufgabe zugrunde, den Nahbereich eines Lichttasters der gattungsgemäßen Art mit einem Geringstmaß an Aufwand zu erweitern, so daß auch näher als bisher am Lichttaster befindliche Objekte sicher und zuverlässig erkannt werden können.

Die Aufgabe ist erfindungsgemäß durch einen Lichttaster mit den kennzeichnenden Merkmalen des Anspruchs 1 gelöst.

Die erfindungsgemäße Maßnahme ermöglicht neben der dem Lichttaster immanenten Ausblendung des Fernbereichs auch das Ausblenden eines Nahbereichs, der dadurch definiert ist, daß das vom Objekt reflektierte Licht durch die spiegelnde Fläche nicht mehr auf das Empfangselement für den Nahbereich, sondern auf das Empfangselement für den Fernbereich gelenkt wird. Damit besteht die Möglichkeit, ein Fenster zu definieren, in dem das betreffende Tastobjekt noch sicher erfaßt wird.

Die Erfindung wird im nachstehenden anhand der Zeichnung erläutert.

Es zeigen:

Fig. 1    einen Lichttaster mit Nahbereichserweiterung,

Fig. 2    einen Lichttaster mit ausgeblendetem Nah- und Fernbereich.

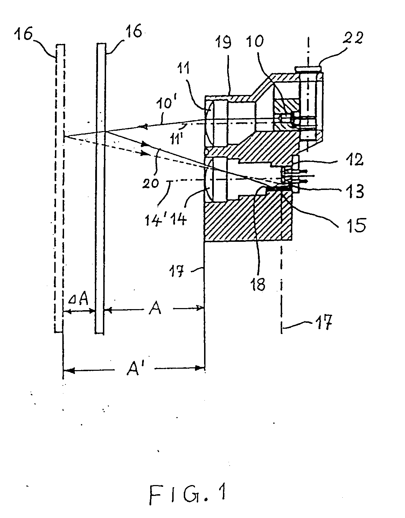

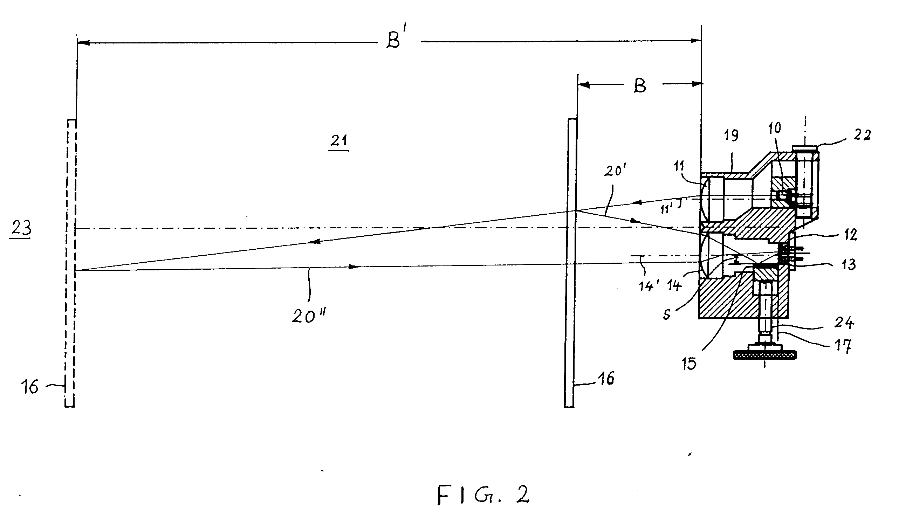

Die beispielsweise Ausführungsformen darstellende Lichttaster gemäß den Figuren 1 und 2 bestehen jeweils aus einen, Lichtsender 10 mit diesem vorgeordneter Sendeoptik 11, zwei räumlich übereinander angeordneten Lichtempfangselementen 12, 13 mit vorgeordneter Empfangsoptik 14 und einem Element 15 mit spiegelnder Oberfläche, das räumlich unterhalb des unteren Lichtempfangselements 13 vorgesehen ist. Das Lichtempfangselement 12 ist das sogenannte Fernelement, das Lichtempfangselement 13 das Nahelement. Bei Annäherung des Objekts 16 (Reflexionsebene) an das Lichttastergehäuse wandert der Lichtfleck vom Fernelement 12 zum Nahelement 13, wodurch dessen Signalamplitude größer wird. Die Signale der beiden Elemente 12 und 13 werden in einem Komperator bezüglich Vorzeichen und Amplitude verglichen, und beim Erreichen eines bestimmten Schwellenwerts wird der Ausgang des Lichttasters aktiviert. Die beiden Lichtempfangselemente 12 und 13 können dabei Einzeldioden sein oder durch eine Differentialdiode verkörpert sein.

Das spiegelnde Element 15 erstreckt sich in Richtung der optischen Achse 14' der Empfangsoptik 14 über die empfangsseitige Frontebene 17 der Lichtempfangselemente 12, 13 hinaus in eine Ausnehmung 18 in der Empfangsoptik 14 hinein, wobei ein geeigneter Paßsitz gewählt ist. Das Ausmaß des Überstands des spiegelnden Elements 15 über die Frontebene 17 ist dem jeweiligen Bedarfsfall angepaßt bzw. durch Axial- und/oder Radialverschiebung des Elements dem jeweiligen Einzelfall anpaßbar. Sämtliche Bauteile sind in einem Gehäuse 19 untergebracht.

Wie aus Figur 1 ersichtlich ist, würde bei im Abstand A von der Gehäusevorderseite befindlichem reflektierendem Objekt 16 der Zentralstrahl 20 der Empfangslichtbündels bei Nichtumlenkung durch die spiegelnde Oberfläche des Elements 15 das Lichtempfangselement 13 nicht beaufschlagen. Dies wäre, wie gestrichelt angedeutet ist, erst dann der Fall, wenn sich das Objekt 16 im Abstand A' vom Lichttaster entfernt befinden würde.

Durch die Umlenkung des Empfangslichtstrahls 20 durch die spiegelnde Oberfläche des Elements 15 wird somit eine Erweiterung des Nahbereichs, in welchem Objekte noch sicher erkannt werden, um die Distanz A' - A = $\Delta$ A erzielt.

Zur Anpassung des Lichttasters an bzw. zu dessen Einstellung für unterschiedliche Entfernungen bezüglich des Schaltpunkts im Fernbereich ist eine Stellschraube 22 vorgesehen, mittels derer der beispielsweise als impulsmodulierte Infrarotdiode ausgebildete Lichtsender 10 (Sendelichtstrahl 10') quer zur optischen Achse 11' der Sendeoptik 11 verschiebbar ist (Hintergrundausblendung).

Die mit der Erfindung erzielte Erweiterung des Nahbereichs ist unabhängig vom Reflexionsvermögen des jeweiligen Objekts.

Neben einer Erweiterung des Nahbereichs ermöglicht die erfindungsgemäße Maßnahme auch die Ausblendung eines Nah- und Fernbereichs.

Wie Fig. 2 zeigt, ist die Vordergrundausblendung bei einer solchen Entfernung B eines Objekts 16 vom Lichttastergehäuse gegeben, bei der der Empfangslichtstrahl 20' vom Spiegelelement 15 nicht mehr auf das Nah-Empfangselement 13, sondern auf das Fern-Empfangselement 12 gelenkt wird. Auf dieses Element trifft auch der vom im Abstand B' vom Lichttaster befindlichen gestrichelt angedeuteten Objekt 16 reflektierte Lichtstrahl 20" gerade noch auf. Der Bereich 23 hinter dem im Abstand B' liegenden Objekt 16 ist ausgeblendet (Fernbereichsausblendung).

Durch die Ausblendung eines Fern- und Nahbereichs ist ein definiertes Erkennungsfeld 21 (Fenster) gewonnen, das in Figur 2 durch die vordere und hintere Position des Objekts 16 abgegrenzt ist.

Für die Einstellung unterschiedlicher Entfernungen bezüglich des Schaltpunktes im Nahbereich ist eine Stellschraube 24 vorgesehen, mittels derer das spiegelnde Element 15 verschiebbar angeordnet ist und zwar derart, daß der Abstand S zwischen Spiegeloberfläche und optischer Achse 14' variierbar ist, wobei die Spiegeloberfläche parallel zur optischen Achse 14' verläuft (Vordergrundausblendung).

In diesem Fall ist bei entsprechender axialer Erstreckung des spiegelnden Elements 15 ein hinreichender Bewegungsspielraum dieses Elements quer zur optischen Achse 14' der Empfangsoptik 14 vorzusehen.

## Patentansprüche

1. Reflexionslichttaster zum Erkennen von Objekten innerhalb vorgegebener Abstände, welcher wenigstens ein Lichtempfangselement (13) für den Nahbereich und wenigstens ein Lichtempfangselement (12) für den Fernbereich enthält, wobei die Signale der lichtempfangselemente miteinander verglichen werden und der Ausgang des Lichttasters beim Erreichen eines bestimmten Schwellenwerts aktiviert wird, wobei den Lichtempfangsele menten (12, 13) ein mit diesen zusammenwirkendes Element (15) mit spiegelnder Oberfläche zugeordnet ist, dadurch gekennzeichnet, daß die Lichtelemente (12, 13) senkrecht zur optischen Achse der Empfangsoptik (14) angeordnet sind, und daß die spiegelnde Oberfläche des Elements an das Nahelement angrenzt und sich in Richtung der optischen Achse der Emfangsoptik (14) erstreckt, so daß mit geringer werdendem Objektabstand von der spiegelnden Oberfläche reflektierte Empfangslichtstrahlen (20) zuerst auf das Nahempfangselement (13) und dann auf das Fernempfangselement (12) treffen.

2. Reflexionslichttaster nach Anspruch 1, dadurch gekennzeichnet, daß das spiegelnde Element (15) in eine schlitzförmige Ausnehmung (18) in der Empfangsoptik (14) eingreift.

3. Reflexionslichttaster nach einem der vorhergehenden Ansprüche, dadurch gekennzeichnet, daß das spiegelnde Element (15) quer zur Richtung der optischen Achse (14') der Empfangsoptik (14) verschiebbar und in der jeweils gewünschten Position arretierbar ist.

## Claims

1. Reflection light sensor for recognition of objects within preset spacings, which comprises at least one light receiving element (13) for the proximal range and at least one light receiving element (12) for the distal range, wherein the signals of the light receiving elements are compared with one another and the output of the light sensor is activated on attainment of a determined threshold value, wherein the light receiving elements (12, 13) are associated with an element (15), which co-operates therewith, with a reflective surface, characterised thereby that the light elements (12, 13) are arranged perpendicularly to the optical axis of the receiving optical system (14) and that the reflective surface of the element adjoins the proximal element and extends in the direction of the optical axis of the receiving optical system (14), so that with the object spacing from the reflective surface becoming smaller reflected reception light beams (20) are incident initially on the proximal receiving element (13) and then on the distal receiving element (12).

2. Reflection light sensor according to claim 1, characterised thereby that the reflective element (15) engages in a slot-shaped recess (18) in the receiving optical system (14).

3. Reflection light sensor according to one of the preceding claims, characterised thereby that the reflective element (15) is displaceable transversely to the direction of the optical axis (14′) of the receiving optical system (14) and is lockable in the respectively desired position.

## Revendications

1. Détecteur photoélectrique par réflexion pour détecter des objets à l'intérieur de distances prédéterminées, lequel comprend au moins un élément de réception de la lumière (13) pour la zone rapprochée et au moins un élément de réception de la lumière (12) pour la zone éloignée, cependant que l'on compare entre eux les signaux des éléments de réception de la lumière, que la sortie du détecteur photoélectrique est activée lorsqu'une valeur seuil déterminée est atteinte, et qu'un élément (15) à surface réfléchissante est associé aux éléments de réception de la lumière (12, 13) en coopérant avec eux, caractérisé par le fait que les éléments de réception de la lumière (12, 13) sont disposés perpendiculairement à l'axe optique de l'optique de réception (14), et par le fait que la surface réfléchissante de l'élément est contiguë à l'élément récepteur de la zone rapprochée et qu'elle s'étend dans la direction de l'axe optique de l'optique de réception (14), de sorte que, lorsque la distance de l'objet par rapport à la surface réfléchissante devient plus faible, les rayons lumineux réfléchis reçus (20) rencontrent tout d'abord l'élément récepteur de la zone rapprochée (13), puis l'élément récepteur de la zone éloignée (12).

2. Détecteur photoélectrique par réflexion selon la revendication 1, caractérisé par le fait que l'élément réfléchissant (15) pénètre dans un évidement (18) en forme de fente qui est ménagé dans l'optique de réception (14).

3. Détecteur photoélectrique par réflexion selon l'une des revendications précédentes, caractérisé par le fait que l'élément réfléchissant (15) peut être déplacé transversalement par rapport à la direction de l'axe optique (14′) de l'optique de réception (14), et qu'il peut être bloqué dans la position qui est souhaitée a chaque fois.

FIG. 1

EP 0 527 326 B1

FIG. 2

9